# EUROPÄISCHE PATENTSCHRIFT

(11) **EP 3 234 205 B1**
(45) Veröffentlichungstag und Bekanntmachung des Hinweises auf die Patenterteilung: **30.12.2020**
(21) Anmeldenummer: 15808361.8
(22) Anmeldetag: 24.11.2015
(51) Int. Cl.: C22B 7/04, C22B 1/00, C22B 5/10, C22B 7/00, C22B 7/02, F27B 1/08, F27B 1/10, F27D 11/06, F27D 17/00

(54) **VERFAHREN ZUM REDUZIEREN VON SCHMELZFLÜSSIGEN EINSATZSTOFFEN SOWIE VORRICHTUNG ZUR DURCHFÜHRUNG DIESES VERFAHRENS**
METHOD FOR REDUCING MOLTEN RAW MATERIALS, AND DEVICE FOR CARRYING OUT SAID METHOD
PROCÉDÉ DE RÉDUCTION DE MATIÈRES PREMIÈRES FONDUES ET DISPOSITIF POUR METTRE EN UVRE CE PROCÉDÉ

(30) Priorität: 16.12.2014 DE 102014226117
(43) Veröffentlichungstag der Anmeldung: 25.10.2017
(73) Patentinhaber: SHOWA DENKO CARBON Germany GmbH, 86405 Meitingen (DE)
(72) Erfinder: EDLINGER, Alfred, A-6781 Bartholomäberg (AT); STEPPICH, Daniel, 86473 Ziemetshausen (DE)
(86) Internationale Anmeldenummer: PCT/EP2015/077476
(87) Internationale Veröffentlichungsnummer: WO 2016/096332

(56) Entgegenhaltungen:
- EP-A1- 2 185 881
- WO-A1-2010/022425
- AT-B1- 502 577

## Beschreibung

Die Erfindung betrifft ein Verfahren zum Reduzieren von schmelzflüssigen Einsatzstoffen, bei dem die Einsatzstoffe in festem, schmelzflüssigem oder gasförmigem Zustand auf ein zumindest teilweise induktiv erhitztes Bett mit stückigem Koks aufgegeben werden und die aus dem Koksbett ablaufende reduzierte Schmelze gesammelt und die Abgase abgeleitet werden. Die Erfindung bezieht sich weiter auf eine Vorrichtung zur Durchführung dieses Verfahrens, umfassend einen Reaktor für die Aufnahme eines Betts mit stückigem Koks und eine wenigstens eine Induktionsspule umfassende Induktionsheizung zum induktiven Beheizen des Koksbetts.

Zu reduzierende schmelzförmige Einsatzstoffe sind insbesondere Erze, Stäube, Schlacken, Pyrolyse-, Vergasungs- und Verbrennungsrückstände, Schmelzen, Schlämme, ESU (Elektro-Schlacken-Umschmelz)- Schlackenkomponenten (wie z.B. CaO, CaF₂, Al₂O₃) und/oder metalloxidische Gläser sowie zu entgasende mineralische Schmelzen.

Stückiger Koks im Sinne dieser Erfindung sind insbesondere Kohlenstoffträger wie Koks, Anthrazit und Graphit. Sehr vorteilhaft werden diese Kohlenstoffträger erfindungsgemäß mit hochreaktiven Kohlenstoffträgern wie Stein-, Braun- oder Holzkohle, Biomasse, unbelasteter oder belasteter Aktivkohle gemischt.

Stäube und Schlacken, insbesondere Müllschlacken, Schredder-Leichtfraktion, Verbundmaterialien wie beispielsweise beschichtete Aluminiumfolien, Stahlschlacken sowie Schlacken aus der Nichteisenmetallurgie und anorganischen Technologie, enthalten eine Reihe von Metalloxiden, wobei im Fall von Stahlschlacken erhebliche Mengen an Schwermetalloxiden in der Schlacke vorliegen.

Zur Reduktion derartiger unerwünschter Metalloxide, insbesondere der Oxide von Chrom, Vanadium, Molybdän, Wolfram, Kobalt, Mangan, Blei, Kupfer und Zink, wurde bereits vorgeschlagen, flüssige Schmelze auf ein entsprechendes reduzierendes Metallbad, insbesondere ein Eisenbad, welches gelösten Kohlenstoff als Reduktionsmittel enthält, aufzubringen, wobei die reduzierten Metalle in den Metallregulus oder die Gasphase übergehen.

Für die wirtschaftliche Durchführung eines derartigen Verfahrens ist es aber zumeist erforderlich, die Ausgangsmaterialien unmittelbar als Schmelzen einzusetzen, um die Wärme der Schmelze nützen zu können.

Des Weiteren befindet sich bei allen derartigen Reaktionen die Schlacke mit dem Metallbad im Gleichgewicht und auf Grund der Gleichgewichtsbedingungen lassen sich Schwermetalle nie in einer Weise vollständig reduzieren, bei welcher die in der Schlacke verbleibenden Oxide unter der analytischen Nachweisgrenze wären. Dies gilt insbesondere für Chrom- und Vanadiumoxide, welche in der reduzierenden Schlacke in Mengen von zumindest über 1000 ppm verbleiben.

Gläser, insbesondere Glaschmelzen, können nur dann farblos hergestellt werden, wenn aus derartigen Glasschmelzen auch geringe Spuren von Schwermetalloxiden quantitativ entfernt werden, da die Metalloxide dem Glas entsprechende Farben verleihen.

In diesem Zusammenhang wurde in der AT 502 577 B1 bereits vorgeschlagen, feste Partikel und/oder Schmelzen auf ein zumindest teilweise induktiv erhitztes Bett oder eine Säule mit stückigem Koks aufzugeben und die ablaufende reduzierte und/oder entgaste Schmelze zu sammeln.

Relevanter Stand der Technik ist auch dem Dokument WO 2010/022425 A1 zu entnehmen.

Ein derartiges Koksbett hat gegenüber den bekannten Metallbädern ein wesentlich höheres Reduktionspotential, wobei sowohl das Schmelzen als auch das Reduzieren direkt im Koksbett bzw. direkt an den Koksstücken erfolgt.

Die entsprechenden Frequenzen liegen bei etwa 50 bis 100 kHz, was wiederum dazu führt, dass die aufgewendete Energie aufgrund des Skin-Effektes nur am äußerem Rand des Koksbettes eingebracht werden kann. Um das Koksbett auch in der Mitte der Schüttung ausreichend zu erhitzen, sind hohe Leistungen erforderlich, da eine Wärmeleitung durch den Koks von der induktiv beheizten Randzone zur Mitte hin nur in sehr geringem Ausmaß stattfindet.

Ein Nachteil liegt im Auftreten von unerwünschten Nebenreaktionen der im Koksbett entstehenden Gaskomponenten mit den schmelzflüssigen Einsatzstoffen. Das Verfahren ist daher nur beschränkt für die Aufarbeitung von Einsatzstoffen, insbesondere Feinstäuben, einsetzbar, die mit Schwermetallen, Phosphor, Alkalien (insbesondere Lithium), Dioxinen, Halogenen, toxischen Organika, Hormonen oder pharmazeutischen Rückständen belastet sind.

Die Erfindung zielt daher darauf ab, ein Verfahren und eine Vorrichtung der eingangs genannten Art dahingehend zu verbessern, dass unter Vermeidung der oben genannten Nachteile in besonders einfacher und wirtschaftlicher Weise Festsubstanzen und Schmelzen weitestgehend quantitativ von unerwünschten Substanzen befreit werden können und insbesondere eine Reihe von Schwermetalloxiden bis unter die Nachweisgrenzen eliminiert werden können.

Zur Lösung dieser Aufgabe besteht das erfindungsgemäße Verfahren gemäß einem ersten Aspekt im Wesentlichen darin, dass ein Koksbett eingesetzt wird, dass innen von einem rohrförmigen Element begrenzt wird, wobei das rohrförmige Element beheizt wird und die Reaktionsgase aus dem Koksbett über eine Mehrzahl von in dem rohrförmigen Element ausgebildeten Abzugsöffnungen abgezogen werden.

Gemeinsam mit den schmelzflüssigen Einsatzstoffen können Reduktionsmittel eingebracht werden. Bevorzugte Reduktionsmittel sind Kohlestaub, Erdgas, KohlenwasserStoffe, Wasserstoff, Kohlenmonoxid und/oder Ammoniak. Vorzugsweise wird das Reduktionsmittel in das Koksbett eingeblasen oder eingesaugt. Als weiteres Reduktionsmittel kann auch die Koksschüttung dienen.

Es ist bevorzugt, dass die Abzugsöffnungen die Wand des rohrförmigen Elements durchsetzen und im Innern des rohrförmigen Elements münden.

Dadurch, dass das Koksbett innen von einem rohrförmigen beheizbaren Element begrenzt wird, wird die Möglichkeit geschaffen, das Koksbett nicht nur von außen, sondern von innen her zu beheizen. Dadurch wird ein wesentlich flacherer Temperaturgradient erreicht und es werden die oben im Zusammenhang mit dem Skin-Effekt erwähnten Nachteile des mangelnden Energieeintrags vermieden.

Gleichzeitig wird durch das rohrförmige Element die Möglichkeit geschaffen, die in der Koksschüttung entstehenden Reaktionsgase rascher abzuziehen. Alle anderen bekannten Schachtofenkonzepte werden aktuell ausschließlich entweder im Gegenstrom- bzw. Gleichstromverfahren betrieben, bei dem Schmelze und Gasstrom entweder gegeneinander bzw. parallel ausgerichtet sind. Die vorliegende Erfindung ermöglicht nun erstmals eine Gasführung senkrecht zur Flussrichtung der Schmelze innerhalb eines Schachtofenkonzepts. Das rohrförmige Element weist zu diesem Zweck eine Mehrzahl von Abzugsöffnungen auf, über welche die Reaktionsgase unmittelbar im Bereich ihrer Entstehung radial abgezogen werden können, so dass unerwünschte Reaktionen mit dem schmelzflüssigen Einsatzmaterial unterbleiben. Der unmittelbare Abzug der Reaktionsgase hat den weiteren Effekt, dass dadurch die Reaktionskapazität des Koksbetts wesentlich erhöht wird. Gleichzeitig kann der Schmelzefluss hinsichtlich der Durchflussraten aufgrund des reduzierten Gasvolumens innerhalb der Koksschüttung signifikant optimiert werden.

Der unmittelbare Abzug der Reaktionsgase erlaubt es weiter, das chemische Gleichgewicht in die gewünschte Richtung zu verschieben, was insbesondere im Fall von Komponenten von Vorteil ist, die während der Reaktion einen Phasenwechsel vollziehen.

Es ist besonders bevorzugt, dass das rohrförmige Element der Geometrie des Koksbetts angepasst ist. Vorzugsweise weist das rohrförmige Element einen runden oder rechteckigen oder daraus kombinierten Querschnitt auf. Es ist ferner bevorzugt, dass das rohrförmige Element ein elektrisch leitfähiger, gasdurchlässiger und/oder mit Bohrungen versehener, hochtemperaturbeständiger Körper ist.

In vorteilhafter Weise wird das rohrförmige Element induktiv beheizt, so dass für die Beheizung des Koksbetts und des rohrförmigen Elements dieselbe Induktionsheizung verwendet werden kann. Mit Rücksicht auf die verschiedenen Ankoppelungsfrequenzen des Koksbetts und des rohrförmigen Elements an das Induktionsfeld der Induktionsheizung, müssen jedoch besondere Vorkehrungen getroffen werden.

Eine bevorzugte Weiterbildung sieht daher vor, dass die für die induktive Beheizung des Koksbetts und des rohrförmigen Elements vorgesehene Induktionsheizung alternierend oder gleichzeitig mit Wechselstrom unterschiedlicher Frequenz betrieben wird. Höhere Frequenzen sind hierbei erforderlich, um das Koksbett induktiv zu beheizen. Niedrigere Frequenzen sind erforderlich, um das rohrförmige Element induktiv zu beheizen.

Dabei wurde beobachtet, dass das Koksbett für die niedrigeren Frequenzen transparent ist, so dass das rohrförmige Element mit gutem Wirkungsgrad an das Induktionsfeld ankoppelt. Es können dadurch hohe Temperaturen von 1900°C und mehr mit hoher Leistungsdichte im Koksbett erreicht werden. In bevorzugter Weise besteht das rohrförmige Element dabei aus Graphit, wobei der Graphitkörper an der dem Koksbett zugewandten Seite eine von Kohlenstoff verschiedene Beschichtung aufweisen kann. Insbesondere kann die Oberfläche siliziert sein, so dass eine verschleißfeste SiC-Oberfläche entsteht.

Je nach Wahl der Wechselstromfrequenz der Induktionsheizung erfolgt eine Ankoppelung unterschiedlicher Korngrößenanteile der Koksschüttung. Jede Korngröße hat eine optimale Resonanzfrequenz, wobei größere Koksstücke bei niedrigeren Frequenzen ankoppeln als kleinere Koksstücke. Da das Koksbett in der Regel eine Korngrößenverteilung aufweist, kann durch Wahl der Wechselstromfrequenz die gewünschte Fraktion des Koksbetts beheizt werden. Durch Variation der Wechselstromfrequenz können hierbei in vorteilhafter Weise die verschiedenen Fraktionen gezielt zum Ankoppeln gebracht werden, so dass ein Energieeintrag über die gesamte radiale Erstreckung des Koksbetts sichergestellt ist.

Bei einer synchronen Betriebsweise erfolgt bevorzugt eine Modulation des niederfrequenten Wechselstroms mit einer oder mehreren höheren Frequenzen. Bei der alternierenden Betriebsweise kommen bevorzugt zwei oder mehr unterschiedliche Wechselstromfrequenzen nacheinander und abwechselnd zur Anwendung.

Gemäß einer bevorzugten Weiterbildung ist vorgesehen, dass Wechselstrom wenigstens einer ersten und einer zweiten Frequenz zum Einsatz gelangt. Dabei beträgt die erste Frequenz vorzugsweise 2-10 kHz. Die zweite Frequenz beträgt vorzugsweise 50-200kHz, insbesondere 75-130 kHz.

Das erfindungsgemäße Verfahren ist für die Aufarbeitung einer Reihe von problematischen Einsatzstoffen geeignet, insbesondere für die Aufarbeitung von problematischen Feinstäuben, welche z.B. mit Schwermetallen wie Pb, Cd, Hg oder Zn belastet sind.

Zur Lösung der der Erfindung zugrunde liegenden Aufgabe besteht die Erfindung gemäß einem weiteren Aspekt bei einer Vorrichtung der eingangs genannten Art im Wesentlichen darin, dass der Reaktor zur Aufnahme eines im Querschnitt ringförmigen Koksbetts ausgebildet ist, das innen von einem rohrförmigen Element des Reaktors begrenzt ist, wobei das rohrförmige aus einem zur induktiven Kopplung an das Induktionsfeld der Induktionsspule geeigneten Material, insbesondere Graphit, besteht und eine Mehrzahl von Abzugsöffnungen zum Abziehen von Reaktionsgasen aus dem Koksbett aufweist.

Da das Koksbett und das rohrförmige Element bei voneinander verschiedenen Frequenzen des Induktionsfelds ankoppelt, sieht eine bevorzugte Weiterbildung vor, dass die Spannungsversorgung der Induktionsheizung wenigstens einen Frequenzumrichter oder Frequenzgenerator mit einer Steuervorrichtung umfasst, der ausgebildet ist, um die Induktionsheizung alternierend oder gleichzeitig mit Wechselstrom unterschiedlicher Frequenzen zu betreiben.

Besonders bevorzugt kann die Steuervorrichtung ausgebildet sein, um die Induktionsheizung mit Wechselstrom wenigstens einer ersten und zweiten Frequenz zu betreiben. Dabei beträgt die erste Frequenz vorzugsweise 2-10 kHz und die zweite Frequenz bevorzugt 50-200kHz, insbesondere 75-130 kHz.

Eine weitere bevorzugte Ausbildung sieht vor, dass Leitungen zum Einblasen reaktiver Gase in das Koksbett münden.

Um einen effektiven Abzug der Reaktionsgase aus dem Koksbett zu gewährleisten, ist bevorzugt vorgesehen, dass die Abzugsöffnungen die Wand des rohrförmigen Elements durchsetzen und in einen im Innern des rohrförmigen Elements angeordneten oder ausgebildeten Abzugskanal münden. Um einen über das gesamte Koksbett gleichmäßigen Abzug zu erreichen, ist bevorzugt vorgesehen, dass die Abzugsöffnungen in Umfangsrichtung über das rohrförmige Element verteilt angeordnet sind. Die Abzugsöffnungen sind in Umfangsrichtung hierbei insbesondere gleichmäßig verteilt. Außerdem können die Abzugsöffnungen auch in axialer Richtung, d.h. in Höhenrichtung des Koksbetts verteilt angeordnet sein. Mit Vorteil sind die Abzugsöffnungen in einer Mehrzahl von horizontalen, zueinander parallel verlaufenden Reihen angeordnet.

Besonders bevorzugt kann eine Einrichtung zum selektiven Öffnen und Verschließen wenigstens einer Teilmenge der Abzugsöffnungen vorgesehen sein. Dadurch kann der Gasabzug so eingestellt werden, dass die Reaktionsgase an der den jeweiligen Erfordernissen entsprechenden optimalen Position abgezogen werden.

Um zu verhindern, dass feste oder flüssige Komponenten aus dem Koksbett gemeinsam mit den Reaktionsgasen über die Abzugsöffnungen ausgetragen werden, sieht eine bevorzugte Weiterbildung vor, dass die Abzugsöffnungen in Richtung zum Abzugskanal schräg nach oben verlaufen.

Besonders bevorzugt weisen die Abzugsöffnungen einen ersten Bereich mit einem ersten Strömungsquerschnitt und einen daran anschließenden zweiten Bereich mit gegenüber dem ersten Bereich verringertem Strömungsquerschnitt auf. Diese Ausbildung bewirkt, dass die Reaktionsgase im ersten Bereich der Auszugsöffnungen laminar strömen, wohingegen durch die Querschnittsverengung im zweiten Bereich eine turbulente Strömung bewirkt wird. Die turbulente Strömung begünstigt den Kontakt der mit den Reaktionsgasen ggf. mitgerissenen schmelzförmigen Partikeln mit der Wand der Abzugsöffnungen und untereinander. Die mitgerissenen Partikel agglomerieren hierbei und die dadurch entstehenden Tropfen fließen entlang der Wand der Abzugsöffnungen zurück in den Reaktorraum bzw. in das Koksbett.

Die Erfindung wird nachfolgend anhand von in Zeichnungen schematisch dargestellten Ausführungsbeispielen näher erläutert. In diesen zeigt Figur 1 einen erfindungsgemäßen Reaktor, Figur 2 eine Detailansicht für einen Querschnitt des rohrförmigen Elements zum Abzug der Reaktionsgase und Figur 3 ein mögliches Ausführungsbeispiel für eine Bohrung für den Gaseinzug in das rohrförmige Element.

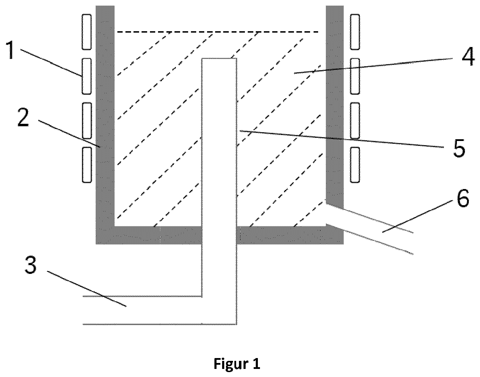

Der erfindungsgemäße Reaktor in Figur 1 besteht aus einer oder mehreren Induktionsspulen 1, die um die Reaktorwand 2 geführt sind. Induktionsspulen 1 und Reaktorwand 2 haben dabei bevorzugt einen runden, aufeinander abgestimmten Querschnitt. Ferner sind bevorzugt rechteckige oder Kombinationen aus runden und rechteckigen Querschnitten möglich. Innerhalb der Reaktorwand 2 befindet sich ein rohrförmiges Element zum Abzug von Reaktionsgasen 3 und eine Schüttung aus stückigem Koks 4. Die Geometrie des rohrförmigen Elements zum Abzug von Reaktionsgasen 5 ist bevorzugt der Geometrie des Reaktors angepasst. Feste und/oder schmelzflüssige Stoffe können in den induktiv erhitzen Reaktor eingebracht werden. Die entstehenden Reaktionsgase werden nun mittels des rohrförmigen Elements zum Abzug von Reaktionsgasen 5 aus der Schüttung aus stückigem Koks 4 mittels einer Druckdifferenz zum Ausgang des Gasabzugsrohres 3 abgezogen. Die verbleibenden schmelzflüssigen Stoffe, z.B. Metallschmelze und/oder Schlacke, kann in der einfachsten Ausführungsform direkt über eine Abstichöffnung 6 aus dem Reaktorinnenraum und der Schüttung aus stückigem Koks 4 entfernt werden.

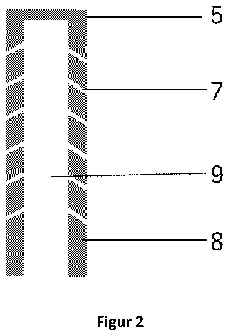

Figur 2 stellt einen möglichen Querschnitt des rohrförmigen Elements zum Abzug von Reaktionsgasen 5 dar. Darin eingebettet sind Bohrungen 7 innerhalb der Rohrwand 8 des rohrförmigen Elements zum Abzug von Reaktionsgasen 5 aus der Schüttung aus stückigem Koks 4. Die Bohrungen sind bevorzug schräg angeordnet in der Form, dass sie von der Außenseite zur Innenseite des rohrförmigen Elements zum Abzug von Reaktionsgasen 5 nach oben verlaufen. Dadurch kann ein Eindringen von festen oder schmelzflüssigen Stoffen aus dem Reaktorvolumen der Schüttung aus stückigem Koks 4 in das Rohrinnere 9 minimiert werden. Eine weitere Ausführungsform des rohrförmigen Elements zum Abzug von Reaktionsgasen 5 stellt ein modularer Aufbau dar. Hierbei können eine beliebige Anzahl von Einzelsegmenten bestehend aus Bohrungen 7 und Segmenten der Rohrwand 8 übereinander angeordnet werden das rohrförmigen Element zum Abzug von Reaktionsgasen 5 aufbauen. Eine zusätzliche Ausführungsform des rohrförmigen Elements zum Abzug von Reaktionsgasen 5 stellt ein modularer Aufbau in der Form dar, dass mehrere Einzelelemente des rohrförmigen Elements zum Abzug von Reaktionsgasen 5 parallel zueinander in die Schüttung aus stückigem Koks 4 eingebracht werden. Bevorzugt weisen die verschiedenen rohrförmigen Elemente zum Abzug von Reaktionsgasen 5 Bohrungen 7 an verschiedenen Ebenen innerhalb der aus stückigem Koks 4 auf. Dadurch kann der Reaktor in einer Weise optimiert werden, dass verschiedene Reaktionsgase, die an verschiedenen Stellen innerhalb der Schüttung aus stückigem Koks 4 separat abgezogen werden können. Es können somit unterschiedliche Reaktionszonen innerhalb der Schüttung aus stückigem Koks 4 definiert werden, aus denen unabhängig Reaktionsgase abgezogen werden. Die Definition der unterschiedlichen Reaktionszonen kann zum Beispiel durch Einstellung unterschiedlicher Temperaturen erfolgen, bzw. durch gezieltes Einbringen von Reaktionspartnern durch Düsen von außerhalb der Reaktorwand 2. Eine weitere Ausführungsform ist das Einbringen eines rohrförmigen Elements zum Abzug von Reaktionsgasen 5 bestehend aus mehreren voneinander abgetrennten Volumen im Rohrinneren 9. Bohrungen auf unterschiedlichen Reaktionszonen ermöglichen den definierten und unabhängigen Abzug von Reaktionsgasen aus der Schüttung aus stückigem Koks 4 in die abgetrennten Volumen im Rohrinneren 9.

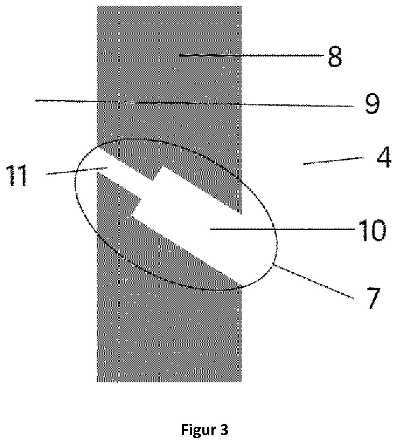

Figur 3 stellt nun eine Detailansicht für eine mögliche Ausführungsform einer Bohrung 7 innerhalb der Rohrwand 8 des rohrförmigen Elements zum Abzug von Reaktionsgasen 5 dar. Die Bohrung 7 ist bevorzug schräg angeordnet in der Form, dass sie von der Außenseite zur Innenseite des rohrförmigen Elements zum Abzug von Reaktionsgasen 5 nach oben verläuft. Zusätzlich ist die Bohrung 7 in 2 Segmente unterschiedlicher Geometrie eingeteilt. Der zur äußeren Teil der Bohrung 10 ist zur Schüttung aus stückigem Koks 4 zugewandt. Er besitzt ein größeres Volumen im Vergleich zum inneren Teil der Bohrung 11, der direkt in das Rohrinnere 9 führt. Durch das größere Volumen des äußeren Teils der Bohrung 10 wird die Geschwindigkeit der Reaktionsgase, die aus der Schüttung aus stückigem Koks 4 angezogen werden verlangsamt und mögliche feste oder schmelzflüssige Partikel, die sich noch im Gasstrom befinden, können zur Unterseite des äußeren Teils der Bohrung 10 sinken und dort zurück in die Schüttung aus stückigem Koks 4 fließen. Durch die Reduktion des Durchmessers im inneren Teil der Bohrung 11 im Vergleich zum äußeren Teil der Bohrung 10 kommt es im inneren Teil der Bohrung 11 zu einer erhöhten Gasgeschwindigkeit und bevorzugt zu einer turbulenten Durchmischung des Reaktionsgases aus der Schüttung aus stückigem Koks 4. Eventuell verbleibende feste oder schmelzflüssige Partikel, die noch nicht im äußeren Teil der Bohrung 10 abgeschieden wurden, vereinigen sich bevorzugt in der turbulenten Zone des inneren Teils der Bohrung 11 zu größeren Partikeln, die dann bevorzugt hier am unteren Teil des inneren Teils der Bohrung 11 abgeschieden werden und von dort zurück in die Schüttung aus stückigem Koks 4 abfließen können. Bevorzugt kann der äußeren Teils der Bohrung 10 durchgängig rotationssymmetrisch um das rohrförmigen Elements zum Abzug von Reaktionsgasen 5 ausgeführt werden, während die inneren Teile der Bohrung 11 an ausgewählten Positionen und in ausgewählter Anzahl in den äußeren Teil der Bohrung 10 eingebracht werden.

### Legende zu den Figuren:

- 1: Induktionsspule
- 2: Reaktorwand
- 3: Abzug von Reaktionsgasen
- 4: Schüttung
- 5: rohrförmiges Element zum Abzug von Reaktionsgasen
- 6: Abstichöffnung
- 7: Bohrungen
- 8: Rohrwand
- 9: Rohrinneres
- 10: Bohrung äußerer Teil
- 11: Bohrung innerer Teil

## Patentansprüche

1. Verfahren zum Reduzieren von schmelzflüssigen Einsatzstoffen, bei dem die Einsatzstoffe in festem oder schmelzflüssigem Zustand auf ein zumindest teilweise induktiv erhitztes Bett mit stückigem Koks aufgegeben werden und die aus dem Koksbett ablaufende reduzierte Schmelze gesammelt und die Abgase abgeleitet werden, **dadurch gekennzeichnet, dass** ein Koksbett eingesetzt wird, das innen von einem rohrförmigen Element begrenzt wird, wobei das rohrförmige Element beheizt wird und die Reaktionsgase aus dem Koksbett über eine Mehrzahl von in dem rohrförmigen Element ausgebildeten Abzugsöffnungen abgezogen werden.

2. Verfahren nach Anspruch 1, **dadurch gekennzeichnet, dass** das rohrförmige Element der Geometrie des Koksbetts angepasst ist.

3. Verfahren nach einem oder mehrerer der vorangehenden Ansprüche, **dadurch gekennzeichnet, dass** das rohrförmige Element einen runden oder rechteckigen oder daraus kombinierten Querschnitt aufweist.

4. Verfahren nach einem oder mehrerer der vorangehenden Ansprüche, **dadurch gekennzeichnet, dass** das rohrförmige Element ein elektrisch leitfähiger gasdurchlässiger und/oder mit Bohrungen versehener hochtemperaturbeständiger Körper ist.

5. Verfahren nach einem oder mehrerer der vorangehenden Ansprüche, **dadurch gekennzeichnet, dass** das rohrförmige Element induktiv beheizt wird.

6. Verfahren nach einem oder mehrerer der vorangehenden Ansprüche, **dadurch gekennzeichnet, dass** eine für die induktive Beheizung des Koksbetts und des rohrförmigen Elements vorgesehene Induktionsheizung alternierend oder gleichzeitig mit Wechselstrom unterschiedlicher Frequenzen betrieben wird.

7. Verfahren nach Anspruch 6, **dadurch gekennzeichnet, dass** Wechselstrom wenigstens einer ersten und einer zweiten Frequenz zum Einsatz gelangt.

8. Verfahren nach einem oder mehrerer der vorangehenden Ansprüche, **dadurch gekennzeichnet, dass** die Abzugsöffnungen die Wand des rohrförmigen Elements durchsetzen und im Innern des rohrförmigen Elements münden.

9. Verfahren nach einem oder mehrerer der vorangehenden Ansprüche, **dadurch gekennzeichnet, dass** das Reduktionsmittel in das Koksbett eingeblasen oder eingesaugt wird.

10. Vorrichtung zum Reduzieren von schmelzförmigen Einsatzstoffen, insbesondere zur Durchführung eines Verfahrens nach einem oder mehrerer der Ansprüche 1 bis 9, umfassend einen Reaktor für die Aufnahme eines Betts mit stückigem Koks und eine wenigstens eine Induktionsspule umfassende Induktionsheizung zum induktiven Beheizen des Koksbetts, wobei der Reaktor eine Aufgabeöffnung für die festen und schmelzflüssigen Einsatzstoffe und eine Abstichöffnung für die behandelte Schmelze aufweist, **dadurch gekennzeichnet, dass** der Reaktor zur Aufnahme eines im Querschnitt ringförmigen Koksbetts ausgebildet ist, das innen von einem rohrförmigen Element des Reaktors begrenzt ist, wobei das rohrförmige aus einem zur induktiven Kopplung an das Induktionsfeld der Induktionsspule geeigneten Material, insbesondere Graphit, besteht und eine Mehrzahl von Abzugsöffnungen zum Abziehen von Reaktionsgasen aus dem Koksbett aufweist.

11. Vorrichtung nach Anspruch 10, **dadurch gekennzeichnet, dass** die Spannungsversorgung der Induktionsheizung wenigstens einen Frequenzumrichter oder Frequenzgenerator mit einer Steuervorrichtung umfasst, der ausgebildet ist, um die Induktionsheizung alternierend oder gleichzeitig mit Wechselstrom unterschiedlicher Frequenzen zu betreiben.

12. Vorrichtung nach Anspruch 11, **dadurch gekennzeichnet, dass** die Steuervorrichtung ausgebildet ist, um die Induktionsheizung mit Wechselstrom wenigstens einer ersten und zweiten Frequenz zu betreiben.

13. Vorrichtung nach einem oder mehrerer der Ansprüche 10 bis 12, **dadurch gekennzeichnet, dass** die Abzugsöffnungen die Wand des rohrförmigen Elements durchsetzen und in einen im Innern des rohrförmigen Elements angeordneten oder ausgebildeten Abzugskanal münden.

14. Vorrichtung nach Anspruch 13, **dadurch gekennzeichnet, dass** die Abzugsöffnungen in Richtung zum Abzugskanal schräg nach oben verlaufen.

15. Vorrichtung nach einem oder mehrerer der Ansprüche 13 bis 14, **dadurch gekennzeichnet, dass** die Abzugsöffnungen einen ersten Bereich mit einem ersten Strömungsquerschnitt und einen daran anschließenden zweiten Bereich mit gegenüber dem ersten Bereich verringerten Strömungsquerschnitt aufweisen.

## Claims

1. Method to reduce molten feedstock, with the feedstock being applied in solid or molten state on an at least partly inductively heated bed of chunky coke, and the reduced melt draining from the coke bed is collected, and the exhaust fumes are vented; **characterized in that** a coke bed is used that is internally limited by a pipe-shaped element, with the pipe-shaped element being heated, and the reaction gases from the coke bed being discharged via a plurality of exhaust vents formed on the pipe-shaped element.

2. Method according to claim 1, **characterized in that** the pipe-shaped element is adapted to the geometry of the coke bed.

3. Method according to one or more of the previous claims, **characterized in that** the pipe-shaped element has a round or rectangular cross-section or a combination of both.

4. Method according to one or more of the previous claims, **characterized in that** the pipe-shaped element is an electrically conductive, high temperature resistant body that is gas-permeable and/or provided with drill holes.

5. Method according to one or more of the previous claims, **characterized in that** the pipe-shaped element is heated inductively.

6. Method according to one or more of the previous claims, **characterized in that** the inductive heating provided for the inductive heating of the coke bed and the pipe-shaped element is alternately or simultaneously operated with an alternate current at different frequencies.

7. Method according to claim 6, **characterized in that** an alternate current is used at least at a first and a second frequency.

8. Method according to one or more of the previous claims, **characterized in that** the exhaust vents are scattered across the wall of the pipe-shaped element and end on the inside of the pipe-shaped element.

9. Method according to one or more of the previous claims, **characterized in that** the reducing agent is blown or sucked into the coke bed.

10. Device to reduce molten feedstock, especially to conduct a process according to one or more of the claims 1 to 9, comprising a reactor to receive a bed of chunky coke and an inductive heating comprising at least one induction coil for the inductive heating of the coke bed, with the reactor having a feed opening for the solid and molten feedstock and a tap hole for the treated melt, **characterized in that** the reactor is designed to receive a coke bed with a ring-shaped cross section that is internally limited by a pipe-shaped reactor element, with the pipe-shaped element being made of a material suitable for inductive coupling with the induction field of the induction coil, especially graphite, and having a plurality of exhaust vents to discharge the reaction gases from the coke bed.

11. Device according to claim 10, **characterized in that** the voltage supply of the inductive heating comprises at least one frequency inverter or frequency generator with a control unit, with the former suitable for operating the inductive heating alternately or simultaneously with alternate current of different frequencies.

12. Device according to claim 11, **characterized in that** the control unit is designed to operate the inductive heating with an alternate current of at least a first and second frequency.

13. Device according to one or more of the claims 10 to 12, **characterized in that** the exhaust vents are scattered across the wall of the pipe-shaped element and end in an exhaust duct arranged or provided on the inside of the pipe-shaped element.

14. Device according to claim 13, **characterized in that** the exhaust vents are running diagonally upwards in the direction of the exhaust duct.

15. Device according to one or more of the claims 13 to 14, **characterized in that** the exhaust vents have a first area with a first flow cross section and an adjacent second area that has a smaller flow cross section compared to the first area.

## Revendications

1. Procédé, destiné à réduire des charges en fusion, lors duquel on alimente les charges à l'état solide ou en fusion sur un lit chauffé au moins en partie par induction avec des fragments de coke et on collecte la masse en fusion s'écoulant du lit de coke et on évacue les gaz de fumée, **caractérisé en ce qu'**on utilise un lit de coke qui est délimité à l'intérieur par un élément de forme tubulaire, l'élément de forme tubulaire et les gaz de réaction étant soutirés du lit de coke par l'intermédiaire d'une multiplicité d'orifices de sortie dans l'élément de forme tubulaire.

2. Procédé selon la revendication 1, caractérisé en ce l'élément de forme tubulaire est adapté à la géométrie du lit de coke.

3. Procédé selon l'une quelconque ou plusieurs des revendications précédentes, **caractérisé en ce que** l'élément de forme tubulaire présente une section transversale ronde ou rectangulaire ou combinée de celles-ci.

4. Procédé selon l'une quelconque ou plusieurs des revendications précédentes, **caractérisé en ce que** l'élément de forme tubulaire est un corps conducteur d'électricité, perméable au gaz et/ou muni de perçages, résistant à des températures élevées.

5. Procédé selon l'une quelconque ou plusieurs des revendications précédentes, **caractérisé en ce que** l'élément de forme tubulaire est chauffé par injection.

6. Procédé selon l'une quelconque ou plusieurs des revendications précédentes, **caractérisé en ce qu'**on fait fonctionner un chauffage à induction prévu pour chauffer par induction, en alternance ou simultanément le lit de coke ou l'élément de forme tubulaire avec un courant alternatif à différentes fréquences.

7. Procédé selon la revendication 6, **caractérisé en ce qu'**on utilise du courant alternatif à au moins une première et une deuxième fréquence.

8. Procédé selon l'une quelconque ou plusieurs des revendications précédentes, **caractérisé en ce que** les orifices de sortie traversent la paroi de l'élément de forme tubulaire et débouchent à l'intérieur de l'élément de forme tubulaire.

9. Procédé selon l'une quelconque ou plusieurs des revendications précédentes, **caractérisé en ce qu'**on insuffle ou on aspire l'agent réducteur dans le lit de coke.

10. Dispositif, destiné à réduire des charges en fusion, destiné notamment à réaliser un procédé selon l'une quelconque ou plusieurs des revendications 1 à 9, comprenant un réacteur qui reçoit un lit de fragments de coke et un chauffage à induction comprenant au moins une bobine d'induction, pour chauffer par induction le lit de coke, le réacteur comportant un orifice d'alimentation pour les charges solides ou en fusion et un orifice de coulée pour la masse en fusion traitée, **caractérisé en ce que** le réacteur est conçu pour recevoir un lit de coke de section transversale annulaire, qui est délimité à l'intérieur par un élément de forme tubulaire du réacteur, l'élément tubulaire étant constitué d'une matière adaptée pour le couplage inductif au champ d'induction de la bobine d'induction, notamment de graphite et comportant une multiplicité d'orifices de sortie, pour soutirer des gaz de réaction du lit de coke.

11. Dispositif selon la revendication 10, **caractérisé en ce que** l'alimentation en tension du chauffage à induction comprend au moins un convertisseur de fréquence ou un générateur de fréquence doté d'un dispositif de commande qui est conçu pour faire fonctionner le chauffage à induction en alternance ou simultanément avec un courant alternatif à différentes fréquences.

12. Dispositif selon la revendication 11, **caractérisé en ce que** le dispositif de commande est conçu pour faire fonctionner le chauffage à induction avec du courant alternatif à au moins une première et une deuxième fréquence.

13. Dispositif selon l'une quelconque ou plusieurs des revendications 10 à 12, **caractérisé en ce que** les orifices de sortie traversent la paroi de l'élément de forme tubulaire et débouchent dans un canal de sortie placé ou conçu à l'intérieur de l'élément de forme tubulaire.

14. Dispositif selon la revendication 13, **caractérisé en ce que** les orifices de sortie s'écoulent en oblique vers le haut, en direction du canal de sortie.

15. Dispositif selon l'une quelconque ou plusieurs des revendications 13 à 14, **caractérisé en ce que** les orifices de sortie comportent une première zone présentant une première section transversale d'écoulement et une deuxième zone qui se raccorde sur celle-ci, présentant une section transversale d'écoulement réduite par rapport à la première zone.
